# EUROPEAN PATENT SPECIFICATION

(11) **EP 1 446 802 B1**
(45) Date of publication and mention of the grant of the patent: **15.10.2008**
(21) Application number: 02770159.8
(22) Date of filing: 16.10.2002
(51) Int. Cl.: G11B 15/60, G11B 15/67

(54) **RECORDING AND/OR REPRODUCING DEVICE COMPRISING A COATED TAPE GUIDE**
AUFZEICHNUNGS- UND/ODER WIEDERGABEGERÄT MIT BESCHICHTETER BANDFÜHRUNGSVORRICHTUNG
DISPOSITIF D'ENREGISTREMENT ET/OU DE REPRODUCTION COMPRENANT UN GUIDE-BANDE REVETU

(30) Priority: 18.10.2001 EP 01000542
(43) Date of publication of application: 18.08.2004
(73) Proprietor: Hewlett-Packard Limited, Bracknell, Berkshire RG12 1HN (GB); Jabil Circuit Cayman L.P., George Town, Grand Cayman (KY)
(72) Inventor: DINHOBL, Catherine, NL-5656 AA Eindhoven (NL)
(74) Representative: Stöckeler, Ferdinand
(86) International application number: PCT/IB2002/004301
(87) International publication number: WO 2003/034423

(56) References cited:
- EP-A- 0 057 409
- WO-A-01/61693
- PATENT ABSTRACTS OF JAPAN vol. 2002, no. 08, 5 August 2002 (2002-08-05) -& JP 2002 109799 A (HEWLETT PACKARD CO), 12 April 2002 (2002-04-12)
- PATENT ABSTRACTS OF JAPAN vol. 018, no. 014 (P-1672), 11 January 1994 (1994-01-11) -& JP 05 250770 A (NISSIN ELECTRIC CO LTD), 28 September 1993 (1993-09-28)
- PATENT ABSTRACTS OF JAPAN vol. 011, no. 058 (P-550), 21 February 1987 (1987-02-21) -& JP 61 222063 A (OLYMPUS OPTICAL CO LTD), 2 October 1986 (1986-10-02)
- PATENT ABSTRACTS OF JAPAN vol. 010, no. 154 (P-463), 4 June 1986 (1986-06-04) -& JP 61 008762 A (TOSHIBA KK), 16 January 1986 (1986-01-16)
- PATENT ABSTRACTS OF JAPAN vol. 009, no. 285 (P-404), 12 November 1985 (1985-11-12) -& JP 60 124051 A (OLYMPUS KOGAKU KOGYO KK), 2 July 1985 (1985-07-02)
- PATENT ABSTRACTS OF JAPAN vol. 009, no. 308 (P-410), 4 December 1985 (1985-12-04) -& JP 60 138757 A (OLYMPUS KOGAKU KOGYO KK), 23 July 1985 (1985-07-23)
- PATENT ABSTRACTS OF JAPAN vol. 010, no. 084 (P-442), 3 April 1986 (1986-04-03) -& JP 60 219662 A (OLYMPUS KOGAKU KOGYO KK), 2 November 1985 (1985-11-02)

## Description

The invention relates to a recording and/or reproducing device for the recording and/or reproduction of information on a tape-shaped data carrier, which data carrier extends in a direction of tape travel and is capable of being moved forwards in the direction of tape travel, wherein the device has a magnetic head for scanning the data carrier and at least one tape guide for guiding the data carrier past the magnetic head, wherein the tape guide has a curved guide wall and two guide flanges projecting beyond the guide wall, which guide flanges lie at a distance from one another in a direction extending perpendicularly to the direction of tape travel and adjoin the guide wall and each merge into the guide wall in a transitional area, wherein the sections of the tape guide that are located in the two transitional areas are able to exert on the delimiting edges of the data carrier a force that, in the event of an incorrect movement of the data carrier occurring perpendicularly to the direction of tape travel, counteracts this incorrect movement.

The invention further relates to a tape guide for a recording and/or reproducing device, which tape guide has a guide wall extending in a curve and two guide flanges projecting beyond the guide wall.

A recording and/or reproducing device as defined in the first paragraph above having two tape guides of the kind defined in the second paragraph above is disclosed in patent WO 01/61693 A1, which means that such a recording and/or reproducing device and such tape guides can be regarded as known.

As has already been explained in the patent cited above, it is possible, as the data carrier in tape form that is formed by a magnetic tape moves forward, for incorrect movements to occur in directions extending perpendicularly to the direction of tape travel, in which case the sections of the tape guide that are located in the two transitional areas between the guide wall and the two guide flanges then exert on the delimiting edges of the data carrier a force that counteracts the incorrect movement described. In the case of the tape guides known from the above-mentioned patent, damping projections are provided in the area of the guide wall of the two tape guide rollers for the purpose of damping such incorrect movements.

Experiments and long-term tests have shown that, as a result of such incorrect movements and the effects that they cause the tape guides and the edges of the recording carrying tape to have on one another, there is both an unacceptably high degree of wear on the tape guides in the sections of the tape guides located in the two transitional areas between the guide wall and the two guide flanges, and also an unacceptably large amount of abrasion in the area of the two edges of the recording carrying tape, this abrasion tending to accumulate in the area of the guide walls of the tape guides, which in turn has the consequence that the standard of guidance provided by the tape guides suffers, and that there may be disruptions to proper recording or reproduction by the magnetic head due to the accumulations of abrasion. It should also be mentioned here that no indication is given in the above-mentioned patent of the material of which the known tape guides are composed in the known recording and/or reproducing device. It is known, however, for such tape guides to be manufactured from aluminum, because tape guides of this kind can be manufactured economically but at the same time with high precision, and to give a high standard of guidance, and for such tape guides of aluminum to be coated with a layer of nickel. It is also known for such tape guides to be made of brass or steel.

In connection with the problems referred to above, it has already been proposed that tape guides be provided with a coating, the coating having a surface hardness of at least 10 GPa, corresponding to a value of at least 1020HV (Vickers hardnees). See JP-202-109799A (priority 21.08.2000; published 12.04.2002), corresponding to US 6.570.740B. What have been proposed as possible materials in this case are titanium-aluminum nitride, tungsten carbide, silicon nitride, chromium nitride, and DLC (diamond-like carbon). Experiments on tape guides having a coating of one of the foregoing materials have revealed that, the hardness of these materials did indeed render it possible to prevent an unacceptably high level of unwanted wear on the tape guides in their sections located in the two transitional areas between the guide wall and the two guide flanges, but it was still not possible to achieve satisfactory recording and/or reproducing conditions and long working lives because, with the tape guides examined that had a coating of one of the afore-mentioned materials, there was an unacceptably high accumulation of material abraded from the tape in the area of the guide walls of the tape guides.

WO 01/61693 A discloses a recording apparatus having a magnetic head and a tape guide roller for guiding a recording carrier in the form of a tape. The tape guide roller has a guide surface which has either two dome-shaped projections and a central, concave curved portion. The tape guide roller has two flanges. The guide surface is spaced apart from the flanges by receding portions provided in the area of the transition between the guide surface and the flanges.

PATENT ABSTRACT OF JAPAN vol. 018, no. 014 (P-1672), 11 January 1994 (1994-01-11)-& JP 05 250770 A (NISSIN ELECTRIC CO LTD), 28 September 1993 (1993-09-28) discloses a magnetic head for a tape recorder having a tape guide. The surface of the tape guide is coated with a titanium nitride.

It is an object of the invention to provide an improved tape guide for a recording and/or reproducing device.

This object is achieved by a tape guide in accordance with claim 1.

What is advantageously achieved by the provision of the features according to the invention is that the sections of a tape guide that are particularly at risk and under stress from the edges of a data carrier in tape form are well safeguarded against an undesirably high degree of wear, which is attributable to the high value of at least 2200 HV of the surface hardness of the coating and to the chromium-free composition of the coating. What is also advantageously achieved, however, is that material abraded from the tape is prevented from accumulating in the area of the tape guide, such an accumulation being disadvantageous to the satisfactory guidance of a data carrier and to the satisfactory scanning of a data carrier, the prevention being attributable to the low value of not more than 40 mN/m of the surface tension of the coating. The advantage of using coatings according to the invention for coating the delimiting walls of a tape guide, which walls are responsible for guiding a data carrier in tape form, lies in particular in the advantageous combination of three properties of these materials that are important in the present connection, namely the combination of high hardness, a chromium-free composition and low surface tension. This advantageous combination of the three aforementioned properties does not arise with the materials referred to previously, namely titanium-aluminum nitride, tungsten carbide, silicon nitride, chromium nitride, and DLC, this being because titanium-aluminum nitride and chromium nitride and silicon nitride are not sufficiently wear-resistant, and because the surface tension of tungsten carbide and DLC is too high.

In a recording and/or reproducing device according to the invention, and in a tape guide according to the invention, it has been found to be highly advantageous for the coating to be composed of zirconium nitride or titanium nitride. Zirconium nitride has an advantageous surface hardness of 3600 HV and titanium nitride has an advantageous surface hardness of 2600 HV. The surface tension of zirconium nitride has an advantageous value of approximately 33 mN/m and the surface tension of titanium nitride has an advantageous value of approximately 40 mN/m. It is an advantage that neither material contains any chromium.

In a recording and/or reproducing device according to the invention, and in a tape guide according to the invention, it is possible for a coating of zirconium nitride or of titanium nitride to be provided only in those sections of the tape guide that are located in the two transitional areas between the guide wall and the two guide flanges. It has, however, proved to be very advantageous if the entire guide wall and the mutually facing delimiting walls of the guide flanges are coated with the coating in their entirety. Such an arrangement has proved to be very advantageous with regard to a simple manufacture.

With regard to the film thickness of the coating provided in accordance with the invention, it may be mentioned that the film thickness is dependent on the design of the tape guide. A tape guide according to the invention may, for example, be formed by a stationary cylindrical tape guide, the cylindrical tape guide wall of which is delimited by guide flanges. Alternatively, however, such a tape guide according to the invention may be formed by a stationary tape guide having a guide wall which is only arcuate or of some other curved shape. With stationary tape guides of this kind, film thicknesses for the coating according to the invention of more than 2.5 µm are advantageous. A tape guide according to the invention may alternatively be formed by a rotatably mounted tape guide roller having a cylindrical guide surface and two guide flanges, in which case it has then been found advantageous for the coating according to the invention to have a thickness of between 1.5 µm and 2.5 µm. It has proved to be particularly advantageous in this case for the coating to have a thickness of 1.8 µm. A coating thickness is this kind is a very good compromise between on the one hand a coating that can be produced as quickly, and thus as cheaply, as possible, and on the other a high resistance to abrasion.

In a recording and/or reproducing device according to the invention, or in a tape guide according to the invention, it has further proved to be very advantageous if the coating has a surface roughness with a roughness value RA of not more than 0.05 µm and preferably of 0.03 µm. Where steps of this kind are taken it has been demonstrated in tests that an especially good signal quality can be achieved in the recording or reproduction of signals on or from a data carrier in tape form. Mention may be made of the fact that in certain applications a coating having a surface roughness with a roughness value RA of only 0.02 µm can be advantageous.

It has proved to be particularly advantageous if the coating is applied by sputtering, and specifically by a physical vapor deposition process. Such a process has proved to be particularly advantageous in the present connection, because with this process relatively low temperatures of not more than approximately 200 °C have been found to be sufficient, which is particularly useful if a tape guide according to the invention is manufactured on the basis of an intermediate product composed of nickel-plated aluminum, the intermediate product then being provided with a coating of zirconium nitride or titanium nitride. Mention may be made of the fact that such an intermediate product may also be made of brass or steel.

These and other aspects of the invention are apparent from and will be elucidated with reference to the embodiments described hereinafter.

The invention will now be described in more detail with reference to the drawings, which show three embodiments given by way of example but to which the invention is not limited.
Fig. 1 is a plan view of a recording and/or reproducing device in accordance with a first embodiment of the invention, which device comprises two tape guides in accordance with a first embodiment of the invention.
Fig. 2 is a sectional view taken on the line II-II in Fig. 1 of a tape guide roller of the device of Fig. 1.
Fig. 3 shows a detail, indicated by circle III-III in Fig. 2, of the tape guide roller of Fig. 2.
Fig. 4 shows part of the detail of Fig. 3 on a larger scale than Fig. 3, part of a magnetic tape being shown as well.
Fig. 5 shows, in a similar way to Fig. 4, a detail of a tape guide in accordance with a second embodiment of the invention.
Fig. 6 shows, in a similar way to Figs. 3 and 5, a detail of a tape guide in accordance with a third embodiment of the invention.

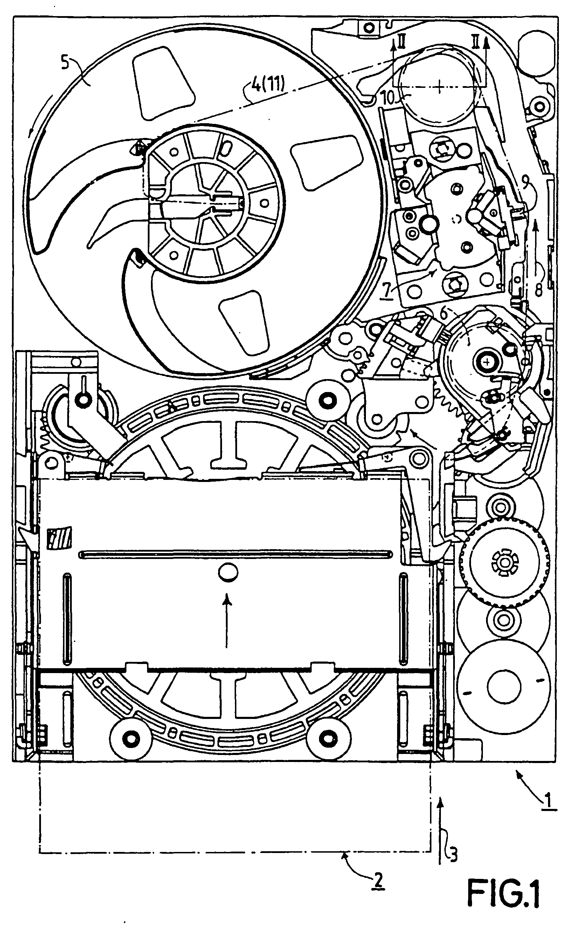

Fig. 1 shows a recording and reproducing device 1 intended and arranged for the recording and reproduction of digital data, and with which a large volume of data can be stored. The recording and reproducing device 1 is referred to below as the storage device 1 for short.

In connection with the storage device 1, reference may be made to the patents listed below, namely:
WO 00/30090, WO 00/30091, WO 00/30092, WO 00/30093, WO 00/30094, WO 00/30095, WO 00/30096, WO 00/30097, WO 00/30098, WO 00/35401, and WO 01/35402. In the above patents, storage devices are disclosed of which many features are similar or identical to those of the storage device 1 shown in Fig. 1. This reference to the patents listed above incorporates the disclosure thereof herein by reference. For this reason, the further description of the storage device 1 shown in Fig. 1 is confined solely to the areas and parts that are of significance in the present connection.

A cassette 2 indicated only in dot-dash lines in Fig. 1 can be inserted into the storage device 1 in the direction of an arrow 3. Housed in the cassette 2 is a data carrier in tape form, namely a magnetic tape, which magnetic tape can be extracted from the cassette 2 by means of an extraction tape 4 provided in the storage device '1, and can then be passed on to a take-up spool 5. After the extraction of the magnetic tape from the cassette 2 has been effected and concluded, the magnetic tape follows the same path as the extraction tape 4, which latter is represented by a dot-dash line in Fig. 1. Following this path, the magnetic tape, not shown in Fig. 1, is then guided away from the cassette 2, across a first tape guide 6, past a magnetic head 9 that is adjustable by means of an actuator device 7 in a direction perpendicular to the direction of tape travel indicated by arrow 8, and across a second tape guide 10 to the take-up spool 5.

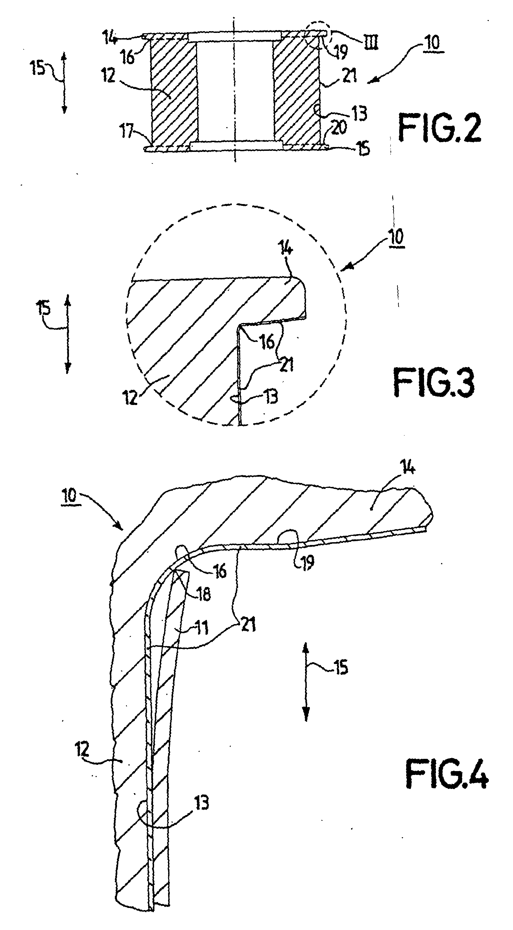

The two tape guides 6 and 10 are tape guide rollers that are rotatably mounted by means of spindles that are not shown in detail. The construction of the second tape guide 10 is described hereinafter in greater detail with reference to Figs. 2 to 4.

The tape guide 10 is intended and arranged to guide the magnetic tape, not shown in Fig. 1. A portion of this magnetic tape 11 is shown in Fig. 4. The tape guide 10 is, as mentioned, in the form of a rotatably mounted tape guide roller. The tape guide 10 has in this case a tubular part 12 that is delimited by a guide wall 13 extending in a curve, and specifically by a guide wall 10 extending in a cylindrical shape. Tape guide 10 also has two guide flanges projecting beyond the guide wall 13, namely a first guide flange 14 and a second guide flange 15. The two guide flanges 14 and 15 are located at a distance from one another in a direction, perpendicular to the direction of tape travel 8, that is indicated by a double-headed arrow 15 in each of Figs. 2 to 4, the said distance between them being chosen so as to match the width of the magnetic tape to be guided. The two guide flanges 14 and 15 each adjoin the guide wall 13, a respective transitional area 16, 17 being provided between the guide wall 13 and each of the two guide flanges 14 and 15. In the case of the tape guide 10 shown in Figs. 2 to 4, the two transitional areas 16 and 17 are arcuate in cross-section. In a tape guide 10 that was actually produced for test purposes, a radius of curvature of approximately 0.1 mm was chosen and realized for the transitional areas 16 and 17. What is achieved with the tape guide 10 by virtue of the two transitional areas 16 and 17 being so designed is that those sections of the tape guide 10 that are located in the two transitional areas 16 and 17 are each able to exert on the delimiting edge 18 of the magnetic tape 11 (see Fig. 4) a force that, if an incorrect movement of the magnetic tape 11 occurs perpendicularly to the direction of tape travel 8, i.e. parallel to the double-headed arrow 15, counteracts this incorrect movement such that the counteracting effect increases as the incorrect movement becomes greater.

In the case of the tape guide 10, the design is advantageously so arranged that the hollow cylindrical guide element 12, and therefore the guide wall 13, and the two guide flanges 14 and 15 of the tape guide 10, are composed of a material that is suitable for retaining a coating, namely of nickel-plated aluminum in this case, and the entire guide wall 13 and the mutually facing delimiting walls 19 and 20 of the guide flanges 14 and 15, and therefore also the transitional areas 16 and 17 between the guide wall 13 and the guide flanges 14 and 15, are coated in their entirety with a coating 21. Hence, in the case of tape guide 10, those sections of the tape guide 10 that are located in the two transitional areas 16 and 17, which sections are able to exert a force on the relevant edge 18 of the magnetic tape 11, are advantageously coated with the coating 21. The coating 21 of the tape guide 10 shown in Figs. 2 to 4 is composed of zirconium nitride in this case. The coating 21 may alternatively be formed by a coating of titanium nitride. Other materials having a surface hardness of at least 2200 HV and a surface tension of not more than 40 mN/m may also be used.

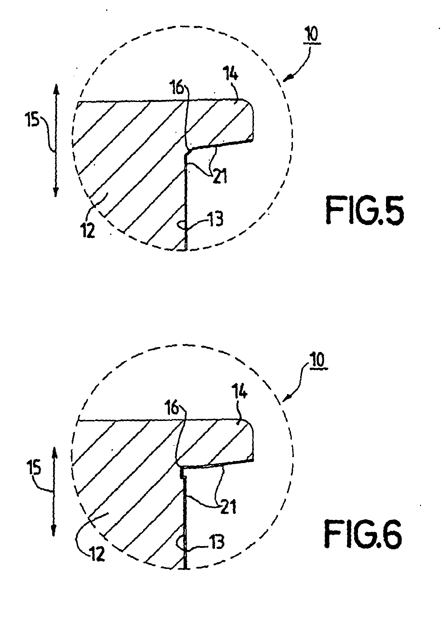

In the tape guide 10 shown in Fig. 5, the transitional areas between the delimiting wall 13 and the guide flanges are formed by a bevel extending substantially in a straight line. Only the first guide flange 14 and the associated transitional area 16 can be seen in Fig. 5.

In the tape guide 10 shown in Fig. 6, the transitional areas are formed by an undercut, as can be seen in Fig. 6 in the case of the transitional area 16 at the first guide flange 14.

In the case of the two tape guides 10 shown in Figs. 5 and 6, coatings 21 are provided in a similar way to those for the tape guide 10 shown in Figs. 2 to 4, these coatings 21 likewise being composed of zirconium nitride.

In the case of all three of the tape guides 10 shown in Figs. 2 to 4, Fig. 5 and Fig. 6 respectively, the provision of the coatings 21 provides both a high wear resistance and a high resistance to the deposition of material abraded from the tape, with the result that a long working life and a high standard of tape guidance can be guaranteed for all these tape guides 10.

## Claims

1. A tape guide (10) for guiding a tape-shaped data carrier (11), which data carrier extends in a direction of tape travel (8) and is able to be moved forwards in the direction of tape travel (8),
which tape guide (10) has a curved guide wall (13) and two guide flanges (14, 15) projecting beyond the guide wall (13), which guide flanges (14, 15) adjoin guide wall (13),
wherein a transitional area (16, 17) is provided between the guide wall (13) and each of the two guide flanges (14, 15), and
wherein those sections of the tape guide (6, 10) that are located in the two transitional areas (16, 17) are able to exert on the delimiting edges (18) of the data carrier (11) a force that, in the event of an incorrect movement of the data carrier (11) occurring perpendicularly to the direction of tape travel (8), counteracts this incorrect movement, and wherein at least the guide wall (13) and the two guide flanges (14, 15) of the tape guide (6, 10) are composed of a material suitable for retaining a coating, and wherein at least those sections of the tape guide (6, 10) that are located in the two transitional areas (16, 17) and are able to exert a force on the delimiting edges (18) of the data carrier (11) are coated with a coating (21),
which coating (21) has a surface hardness of at least 2200 HV and a surface tension of not more than 40 mN/m and contains no chromium.

2. A tape guide (10) as claimed in claim 1, wherein the coating is composed of zirconium nitride or titanium nitride.

3. A tape guide (10) as claimed in claim 1, wherein the entire guide wall (13) and the mutually adjacent delimiting walls (19, 20) of the guide flanges (14, 15) are entirely coated with the coating (21).

4. A tape guide (10) as claimed in claim 1, wherein the coating (21) has a thickness of between 1.5 µm and 2.4 µm.

5. A tape guide (10) as claimed in claim 4, wherein the coating (21) has a nominal thickness of 1.8 µm.

6. A tape guide (10) as claimed in claim 1, wherein the coating (21) has a surface roughness having a roughness value RA of 0.05 µm.

7. A tape guide (10) as claimed in claim 6, wherein the coating (21) has a surface roughness having a nominal roughness value of 0,03 µm.

8. A tape guide (10) as claimed in claim 3, wherein the coating (21) is applied by sputtering, and specifically by a physical vapor deposition process (PVD process).

9. A recording and/or reproducing device (1) for the recording and/reproduction of information on a tape-shaped data carrier (11), which data carrier extends in direction of tape travel (8) and is capable of being moved forward in the direction of tape travel (8),
which recording and/or reproducing device (1) is equipped with a magnetic head (9) for scanning the data carrier (11) and with at least one tape guide (6, 10) as claimed in one of the claims 1 to 8.

## Patentansprüche

1. Eine Bandführung (10) zum Führen eines bandförmigen Datenträgers (11), wobei sich der Datenträger in eine Richtung einer Bandbewegung (8) erstreckt und in der Lage ist, in die Richtung einer Bandbewegung (8) vorwärts bewegt zu werden,
wobei die Bandführung (10) eine gekrümmte Führungswand (13) und zwei Führungsflansche (14, 15) aufweist, die sich über die Führungswand (13) hinaus erstrecken, wobei die Führungsflansche (14, 15) an die Führungswand (13) angrenzen,
wobei ein Übergangsbereich (16, 17) zwischen der Führungswand (13) und jedem der zwei Führungsflansche (14, 15) vorgesehen ist, und
wobei diese Abschnitte der Bandführung (6, 10), die in den zwei Übergangsbereichen (16, 17) positioniert sind, in der Lage sind, auf die begrenzenden Kanten (18) des Datenträgers (11) eine Kraft auszuüben, die in dem Fall einer inkorrekten Bewegung des Datenträgers (11), die senkrecht zu der Richtung einer Bandbewegung (8) auftritt, dieser inkorrekten Bewegung entgegenwirkt, und wobei zumindest die Führungswand (13) und die zwei Führungsflansche (14, 15) der Bandführung (6, 10) aus einem Material gebildet sind, das zum Halten einer Beschichtung geeignet ist, und wobei zumindest diese Abschnitte der Bandführung (6, 10), die in den zwei Übergangsbereichen (16, 17) positioniert sind und in der Lage sind, eine Kraft auf die begrenzenden Kanten (18) des Datenträgers (11) auszuüben, mit einer Beschichtung (21) beschichtet sind,
wobei die Beschichtung (21) eine Oberflächenhärte von zumindest 2200 HV und eine Oberflächenspannung von nicht mehr als 40 mN/m aufweist und kein Chrom beinhaltet.

2. Eine Bandführung (10) gemäß Anspruch 1, bei der die Beschichtung aus Zirkoniumnitrid oder Titannitrid gebildet ist.

3. Eine Bandführung (10) gemäß Anspruch 1, bei der die gesamte Führungswand (13) und die gegenseitig benachbarten begrenzenden Wände (19, 20) der Führungsflansche (14, 15) gänzlich mit der Beschichtung (21) beschichtet sind.

4. Eine Bandführung (10) gemäß Anspruch 1, bei der die Beschichtung (21) eine Dicke zwischen 1,5 µm und 2,4 µm aufweist.

5. Eine Bandführung (10) gemäß Anspruch 4, bei der die Beschichtung (21) eine nominale Dicke von 1,8 µm aufweist.

6. Eine Bandführung (10) gemäß Anspruch 1, bei der die Beschichtung (21) eine Oberflächenrauheit mit einem Rauheitswert RA von 0,05 µm aufweist.

7. Eine Bandführung (10) gemäß Anspruch 6, bei der die Beschichtung (21) eine Oberflächenrauheit mit einem nominalen Rauheitswert von 0,03 µm aufweist.

8. Eine Bandführung (10) gemäß Anspruch 3, bei der die Beschichtung (21) durch Sputtern aufgebracht ist, und insbesondere durch einen physikalischen Dampfaufbrin= gungsprozess (PVD-Prozess; PVD = physical vapor deposition).

9. Eine Aufzeichnungs- und/oder Wiedergabevorrichtung (1) für die Aufzeichnung und/oder Wiedergabe von Informationen auf einem bandförmigen Datenträger (11), wobei sich der Datenträger in eine Richtung einer Bandbewegung (8) erstreckt und in der Lage ist, in die Richtung einer Bandbewegung (8) vorwärts bewegt zu werden,
wobei die Aufzeichnungs- und/oder Wiedergabevorrichtung (1) mit einem Magnetkopf (9) zum Abtasten des Datenträgers (11) und mit zumindest einer Bandführung (6, 10) gemäß einem der Ansprüche 1 bis 8 ausgerüstet ist.

## Revendications

1. Guide-bande (10) pour le guidage d'un support de données en forme de bande (11), support de données qui s'étend dans une direction de déplacement de la bande (8) et qui est à même d'avancer dans la direction de déplacement de la bande (8),
guide-bande (10) qui présente une paroi de guidage courbe (13) et deux brides de guidage (14, 15) faisant saillie au-delà de la paroi de guidage (13), brides de guidage (14, 15) qui sont contiguës à la paroi de guidage (13),
dans lequel une zone transitoire (16, 17) est prévue entre la paroi de guidage (13) et chacune des deux brides de guidage (14, 15), et
dans lequel ces segments du guide-bande (6, 10) qui sont situés dans les deux zones transitoires (16, 17) sont à même d'exercer sur les bords délimitants (18) du support de données (11) une force qui, au cas où un déplacement incorrect du support de données (11) se produit perpendiculairement à la direction de déplacement de la bande (8), contrecarre ce déplacement incorrect, et dans lequel au moins la paroi de guidage (13) et les deux brides de guidage (14, 15) du guide-bande (6, 10) sont réalisées en un matériau approprié pour retenir un revêtement, et dans lequel au moins ces segments du guide-bande (6, 10) qui sont situés dans les deux zones transitoires (16, 17) et sont à même d'exercer une force sur les bords délimitants (18) du support de données (11) sont enduits d'un revêtement (21),
revêtement (21) qui a une dureté de surface d'au moins 2200 HV et une tension superficielle de pas plus de 40 mN/m et ne contient pas de chrome.

2. Guide-bande (10) selon la revendication 1, dans lequel le revêtement se compose de nitrure de zirconium ou de nitrure de titane.

3. Guide-bande (10) selon la revendication 1, dans lequel toute la paroi de guidage (13) et les parois délimitants adjacentes entre elles (19, 20) des brides de guidage (14, 15) sont entièrement enduites du revêtement (21).

4. Guide-bande (10) selon la revendication 1, dans lequel le revêtement (21) a une épaisseur comprise entre 1,5 µm et 2,4 µm.

5. Guide-bande (10) selon la revendication 4, dans lequel le revêtement (21) a une épaisseur nominale de 1,8 µm.

6. Guide-bande (10) selon la revendication 1, dans lequel le revêtement (21) présente une rugosité de surface ayant une valeur de rugosité RA de 0,05 µm.

7. Guide-bande (10) selon la revendication 6, dans lequel le revêtement (21) présente une rugosité de surface ayant une valeur de rugosité nominale de 0,03 µm.

8. Guide-bande (10) selon la revendication 3, dans lequel le revêtement (21) est appliqué par dépôt par pulvérisation et, de manière spécifique, par un procédé physique de dépôt en phase vapeur (procédé PVD).

9. Dispositif d'enregistrement et/ou de reproduction (1) pour l'enregistrement et/ou la reproduction de données sur un support de données en forme de bande (11); support de données qui s'étend dans la direction de déplacement de la bande (8) et qui est à même d'avancer dans la direction de déplacement de la bande (8),
dispositif d'enregistrement et/ou de reproduction (1) qui est équipé d'une tête magnétique (9) destinée à balayer le support de données (11) et d'au moins un guide-bande (6, 10) selon l'une des revendications 1 à 8.
